# EUROPEAN PATENT SPECIFICATION

(11) **EP 0 813 582 B1**
(45) Date of publication and mention of the grant of the patent: **21.07.1999**
(21) Application number: 96907404.6
(22) Date of filing: 06.03.1996
(51) Int. Cl.: C10G 11/18, B01J 8/24

(54) **FEED NOZZLE ASSEMBLY**
ANORDNUNG FÜR EINSATZDÜSEN
ENSEMBLE BUSE D'ALIMENTATION

(30) Priority: 07.03.1995 US 399868; 28.09.1995 US 535850
(43) Date of publication of application: 29.12.1997
(73) Proprietor: SHELL INTERNATIONALE RESEARCH MAATSCHAPPIJ B.V., 2596 HR Den Haag (NL)
(72) Inventor: CHEN, Ye-Mon, Sugar Land, TX 77479 (US); DEWITZ, Thomas, Sean, Houston, TX 77022 (US); BROSTEN, David, Jon, Kingwood, TX 77345 (US); NIELSON, James, Wayne, Jr., Spring, TX 77379-6162 (US)
(86) International application number: EP9601010
(87) International publication number: WO9627647

(56) References cited:
- US-A- 3 071 540
- US-A- 4 331 533

## Description

The invention relates to a feed nozzle for introducing a gas and a liquid into a vessel, particularly for introducing steam and hydrocarbon feed into a catalytic cracking reactor.

Many oil refinery and chemical plant units utilize nozzles for distributing liquid and/or gaseous feed to the unit. In some units, the ability of the nozzle to distribute the feed to the unit is very important to the productivity of the unit. For example, a catalytic cracking unit is a reactor for cracking large chain hydrocarbon molecules found in crude oil into smaller and more valuable commercial products such as gasoline range hydrocarbons and diesel oils. Typically, vacuum distillates are introduced through feed nozzles in an upflow riser reactor where the feed is contacted with regenerated particulate solid catalysts. The catalyst selectively aids desirable cracking reactions.

For peak performance of the reactor, it is essential that the nozzle distribute the feed in a fine spray having a uniform coverage and a narrow droplet size distribution. Such a spray increases the surface area of the feed droplets and facilitates contacting with the catalyst particles. Existing nozzles have difficulty, however, in achieving this desired performance. Some nozzles use very small openings or complex tip design which easily become plugged by various impurities in the feed. The down time and replacement expense in repairing such a blockage is very disadvantageous. Existing nozzles cannot produce fine droplets and/or a desirable spray pattern.

Accordingly, it would be advantageous to have a nozzle capable of achieving a narrow distribution of fine droplets, a thin layer of spray, and not having a tendency for blockage.

To this end the feed nozzle assembly for introducing gas, for example steam, and liquid, for example a heavy petroleum hydrocarbon, into a vessel, for example a catalytic cracking reactor, according to the present invention comprises:
(a) a nozzle body having a substantially cylindrical inner tube defining a gas conduit and an outer tube arranged around the inner tube, wherein the outer surface of the inner tube and the inner surface of the outer tube define an annular liquid conduit, and wherein each of the tubes have an inlet end and an opposite outlet end;
(b) a first nozzle tip fixedly attached to the outlet end of the inner tube having a substantially cylindrical inlet end attached to the outlet end of the inner tube and an opposite dome-shaped outlet end, which dome-shaped outlet end is provided with at least one passageway;
(c) a second nozzle tip fixedly attached to the outlet end of the outer tube and arranged around the first nozzle tip, which second nozzle tip has a substantially cylindrical inlet end attached to the outlet end of the outer tube and an opposite dome-shaped outlet end provided with at least one elongated slit having substantially parallel walls, which the dome-shaped outlet end of the second nozzle tip extends beyond the dome-shaped outlet end of the first nozzle tip.

US Patent publication No. 3071540 discloses a feed nozzle assembly for introducing steam and a heavy petroleum hydrocarbon, into a catalytic cracking reactor, which feed nozzle assembly comprises: a nozzle body having a substantially cylindrical inner tube defining a liquid conduit and an outer tube arranged around the inner tube, wherein the outer surface of the inner tube and the inner surface of the outer tube define an annular gas conduit. US-A-3071540 does not disclose an inner tube having a domed shaped outlet and an outer tube having a dome shaped outlet provided with at least one elongated slit.

The invention will now be described by way of example in more detail with reference to the accompanying drawings, wherein
Figure 1 shows a longitudinal section of the feed nozzle assembly of the invention;
Figure 2 shows a longitudinal section of the upper end of the feed nozzle assembly of the invention drawn to a scale which is larger than the scale of Figure 1;
Figure 3 shows a section along line III-III of Figure 1;
Figures 4A, 4B, and 4C show the dome-shaped outlet end of the first ("steam") nozzle in a frontal view, a section along the line IVB-IVB and a section along the line IVC-IVC;
Figures 5A, 5B, and 5C show the dome-shaped outlet end of the second ("feed") nozzle in a frontal view, a section along the line VB-VB and a section along the line VC-VC;
Figure 6 shows a frontal view of an alternative of the dome-shaped outlet end shown in Figure 5A;
Figure 7 shows a sectional view of an alternative of the dome-shaped outlet end of the first nozzle as shown in Figure 4B drawn to a different scale;
Figure 8 shows a sectional view of an alternative of the dome-shaped outlet end of the second nozzle as shown in Figure 5B drawn to a different scale;
Figure 9 shows a longitudinal partly-sectional view of a side entry reactor configuration, drawn not to scale;
Figures 10A and 10B show a known nozzle from European patent application publication No. 423 876.

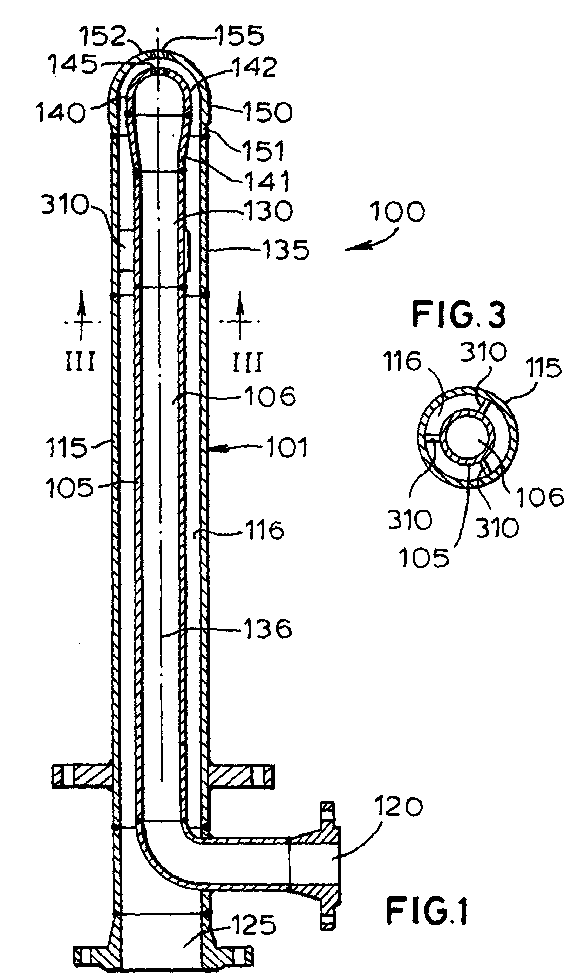

Reference is made to Figures 1, 2 and 3, showing an embodiment of the invention. The feed nozzle assembly 100 for introducing gas, for example steam, and liquid, for example a heavy petroleum hydrocarbon, into a vessel (not shown), for example a catalytic cracking reactor comprises a nozzle body 101 having a substantially cylindrical inner tube 105 defining a gas conduit 106 and an outer tube 115 arranged around the inner tube 105, wherein the outer surface of the inner tube 105 and the inner surface of the outer tube 115 define an annular liquid conduit 116. The inner tube 105 has an inlet end 120 and an opposite outlet end 130, and the outer tube 115 has an inlet end 125 and an opposite outlet end 135. The central longitudinal axis of the inner tube 105 is referred to with reference numeral 136.

The feed nozzle assembly 100 further comprises a first nozzle tip 140 fixedly attached to the outlet end 130 of the inner tube 105. The nozzle tip 140 has a substantially cylindrical inlet end 141 attached to the outlet end 130 of the inner tube 105 and an opposite dome-shaped outlet end 142. The dome-shaped outlet end 142 is provided with at least one passageway 145.

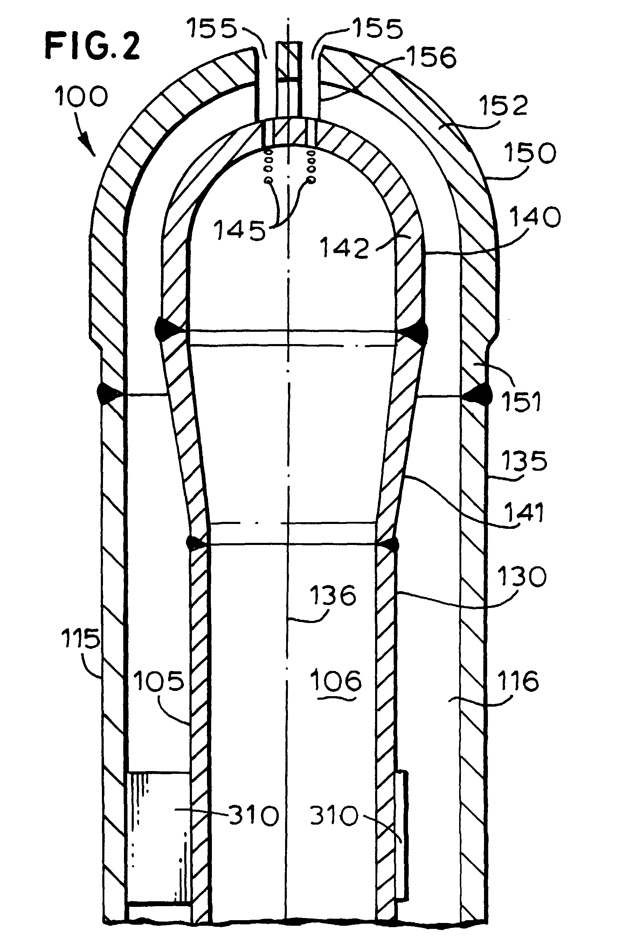

The feed nozzle assembly 100 further comprises a second nozzle tip 150 fixedly attached to the outlet end 135 of the outer tube 115 and arranged around the first nozzle tip 140. The second nozzle tip 150 has a substantially cylindrical inlet end 151 attached to the outlet end 135 of the outer tube 115 and an opposite dome-shaped outlet end 152 provided with at least one elongated slit 155 having substantially parallel walls 156 (see Figure 2). The dome-shaped outlet end 152 of the second nozzle tip 150 extends beyond the dome-shaped outlet end 142 of the first nozzle tip 140.

The inner tube 105 and the outer tube 115 are fixedly joined by spacer studs 310.

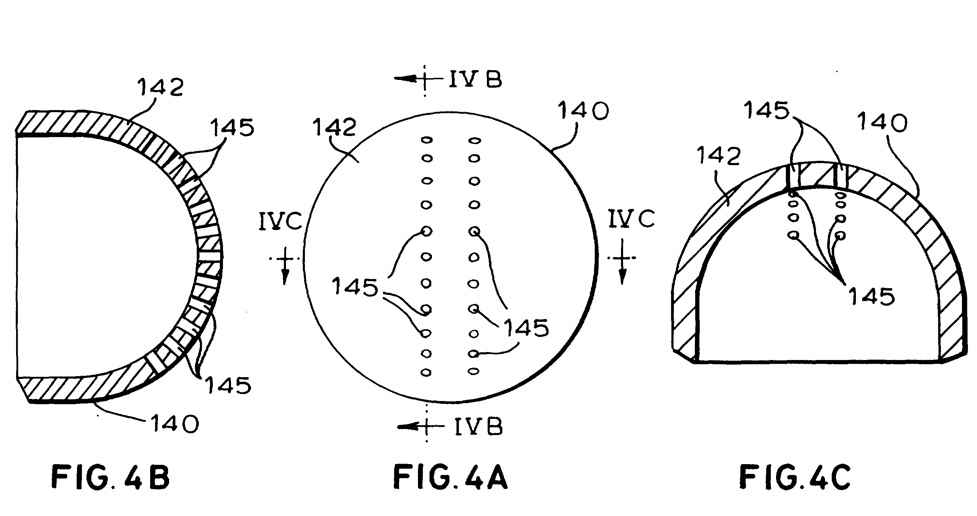

Reference is now made to Figures 4A, 4B, and 4C which show in particular embodiments, the dome-shaped outlet end 142 of the first ("steam") nozzle tip 140. The first nozzle tip 140 is provided with two rows of passageways 145.

The dome-shaped outlet end 142 has a hemi-spherical shape or a hemi-elliptical shape.

The angle formed from substantially the centre (not shown) of the dome-shaped outlet end 142 through the length a row of passageways 145 is suitably in the range of from 45° to 120°, and suitably from 75° to 105°. It will be understood that when the outlet end 142 is hemi-spherical, the centre is the spherical centre and when the outlet end is hemi-elliptical the centre is the elliptical centre.

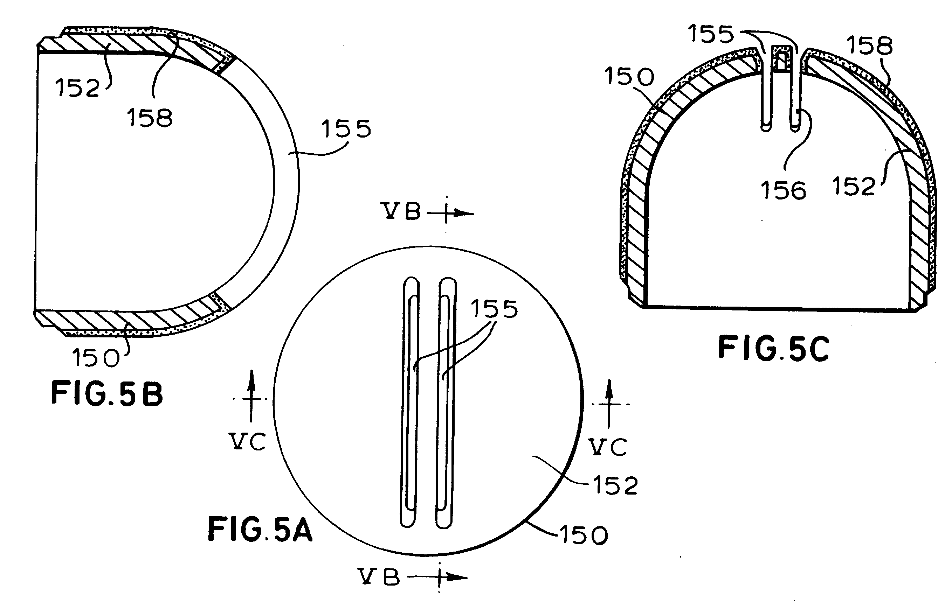

Reference is now made to Figures 5A, 5B, and 5C which show in particular embodiments, the dome-shaped outlet end 152 second ("hydrocarbon feed") nozzle tip 150. The second nozzle tip 150 is provided with two parallel elongated slits 155.

The dome-shaped outlet end 152 has a hemi-spherical shape or a hemi-elliptical shape.

The angle formed from substantially the centre (not shown) of the dome-shaped outlet end 152 of the second nozzle tip 150 through the length of the elongated slit(s) 155 is substantially contiguous with the angle formed from the centre of the dome-shaped outlet end 142 of the first nozzle tip 140 through the length of the row(s) 145. It will be understood that when the outlet end 152 is hemi-spherical, the centre is the spherical centre and when the outlet end is hemi-elliptical the centre is the elliptical centre.

The feed nozzle assembly is suitably used in a process for catalytically cracking a heavy petroleum hydrocarbon. In such a process a heavy petroleum hydrocarbon is preheated, mixed with steam, and fed into a catalytic cracking reactor riser. The heavy petroleum hydrocarbon are then contacted with a cracking catalyst to produce light hydrocarbons and spent catalyst coated with fine coke layer. The light hydrocarbons are removed from the reactor. A portion of the spent catalyst coated with fine coke layer is passed to a regenerator reactor. At least a portion of the coke is then burned off the spent catalyst. This results in a regenerated catalyst.

During normal operation of the feed nozzle assembly 100 according to the present invention steam is passed through the substantially cylindrical inner tube 105 and the heavy hydrocarbon is supplied to the inlet end 125 of the outer tube 115 and passes through the annular liquid conduit 116.

Steam exiting the passageways 145 passes into the hydrocarbon results in the forming of a fine two-phase mixture of steam bubbles jetting through the hydrocarbon mixture. The function of the second nozzle tip 150 is the passage of the mixture of steam and heavy petroleum hydrocarbon out of the feed nozzle assembly 100. The second nozzle tip 150 is adapted to substantially uniformly atomize the mixture of steam and heavy petroleum hydrocarbon into a catalytic cracking reactor (not shown). This results in a mixture of steam and heavy petroleum hydrocarbon which is passed into the catalytic cracking reactor.

The passageways 145 out of the outlet end 142 of the gas conduit 106 do not foul. Fouling due to coking of the heavy petroleum feed is avoided since the flow of heavy petroleum feed around the outside of the outlet end 142 of the gas conduit 106 has a cooling heat transfer function. Thus, the temperature at the passageways 142 is sufficiently low that the contact of steam and heavy petroleum does not result in coking and blockage of the passageways 142.

An aspect of the present invention is a nozzle assembly for feeding a heavy petroleum hydrocarbon into a catalytic cracker riser reactor. The nozzle body 101 is typically oriented horizontally, vertically, or diagonally into the riser reactor (not shown). Other orientations are possible. When vertically oriented, the nozzle body 101 typically will extend upward from the bottom or inlet end of the reactor. When not vertical, the nozzle body 101 will typically protrude through the walls of the reactor in an orientation between vertical and horizontal. Different orientations will typically require different outlet designs since the ideal spray pattern depends on the nozzle orientation. The nozzle assembly 100 of the invention is suited for any of these orientations since the configuration of the elongated slits 155 of the second outlet end 150 can be modified to achieve the desired spray pattern.

Typically with a vertically oriented nozzle body 101, the elongated slits 155 will be a half-moon or crescent shape or other non-linear shape in order to configure the spray to fit the conduit. In a side entry nozzle body 101, the elongated slits 155 or substantially straight lines when viewed from straight on as in Figure 5A.

The first nozzle tip 140 as shown in Figures 4A-4C is provided with two rows of passageways 145, in other embodiments there may only be one passageway, or one row of passageways depending on the application.

The second nozzle tip 150 as shown in Figures 5A-5B is provided with two parallel elongated slits 155, in other embodiments there may only be one slot depending on the application.

The dome-shaped outlet end 142 typically has at least one passageway 145 corresponding with each elongated slit 155 in the outlet end 152 of the second nozzle tip 150. For example, if the second nozzle tip 150 has two elongated slits 155, then the first nozzle tip 140 will have least two corresponding openings passageways 145. A row of passageways 145 can be replaced by a slit.

Typically the passageways 145 in the first nozzle tip 140 will consist of at least one row of small holes which line up with each corresponding elongated slit 155 in the second nozzle tip 150. However, the first nozzle tip 140 may have more than one row of holes corresponding to each elongated slit 155 in the second nozzle tip 150.

The angle formed from the centre of the dome-shaped outlet end 152 of the second nozzle tip 150 through the length of the elongated slits 155 is preferably substantially contiguous with the angle formed from the centre of the dome-shaped outlet end 142 of the first nozzle tip 140 through the width of the row of passageways 145.

Suitably outer tube 115 has a diameter in the range of from 0.05 to 0.25 m (2-9 inches), or from 0.1 to 0.25 m (4-9 inches), or from 0.12 to 0.2 m (5-7 inches).

The distance the dome-shaped outlet end 152 of the second nozzle tip 150 extending beyond the dome-shaped outlet end 142 of the first nozzle tip 140 is adapted to substantially uniformly atomize the mixture of steam and heavy petroleum hydrocarbon into a catalytic cracking reactor. Suitably the distance between the dome-shaped outlet end 152 of the second nozzle tip 150 and the dome-shaped outlet end 142 of the first nozzle tip 140 is typically from about 0.006 to 0.030 m (0.25-1.25 inches).

The first nozzle tip 140 is fixedly attached to the outlet end 130 of the inner tube 105, the attachment is by any conventional means such as a threaded connection or a welded connection. Such connection is also applicable to the second nozzle tip 150 attached to the outer tube 115.

Optionally, an erosion-resistant material is used as an overlay 158 (see Figure 5C) at erosion sensitive areas of the elongated slits 155 and the outlet end 152 of the second nozzle tip 150. Typically, such areas are the portions of the elongated slits 155 and outlet end 152 in contact with catalyst particles. Such particles are abrasive and thus an erosion resistant overlay prolongs the life of the outlet end. An example of such erosion-resistant material is STELLITE, trade name for a series of alloys with cobalt, chromium, tungsten and molybdenum in various proportions.

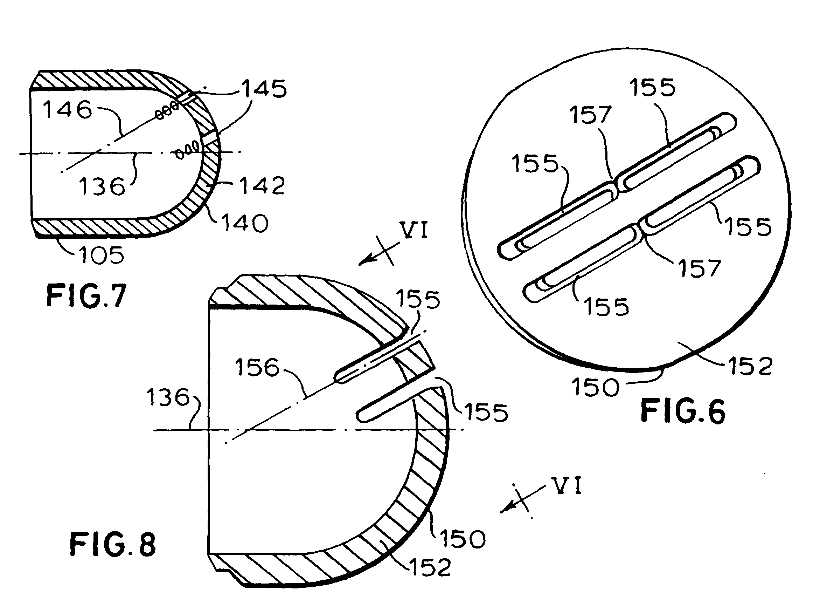

Reference is now made to Figure 6 which shows a frontal view of an alternative of the dome-shaped outlet end 150 shown in Figure 5C. In this embodiment each elongated slit 155 is integrally connected at one point 157 along its walls to provide structural strength.

In the feed nozzle assembly as described with reference to Figures 1-6, the plane (not shown) defined by a row of passageways 145 is substantially parallel to the central longitudinal axis 136 (see Figure 1) of the inner tube 105. Also the plane (not shown) defined by an elongated slit 155 is substantially parallel to the central longitudinal axis 136 of the inner tube 105.

However, there are applications, for example for riser reactors with currently available nozzle designs, where the adjustment of the injection angle of the feed requires expensive modifications of the apparatus. It would therefore be desirable to be able to only replace the feed nozzle in order to adjust the feed injection angle without the need for other equipment modifications.

Reference is now made to Figure 7 which shows a sectional view of an alternative of the dome-shaped outlet end 140 of the first nozzle as shown in Figure 4B drawn to a different scale. In the embodiment shown, the angle between the plane 146 defined by a row of passageways 145 and the central longitudinal axis 136 of the inner tube (not shown) is in the range of from 3° to 60°. Where the nozzle assembly is a side entry into the reactor this angle will be from about 0°, or about 3° to about 45°. Where the feed nozzle assembly is a bottom entry, the angle will be greater, for example, from about 0° to about 60, or preferably from about 15° to about 45°, or from about 20° to about 40, or from about 25° to about 35°. For bottom entry configurations, the angle is typically toward the centre of the riser reactor from the longitudinal axis of the steam conduit. This angle for the first nozzle tip passageways in the outlet end will substantially equal the angle for elongated slits in the outlet end of the second nozzle tip.

Reference is further made to Figure 8 showing a sectional view of an alternative of the dome-shaped outlet end of the second nozzle 150 as shown in Figure 5B, wherein the angle between the plane 156 defined by an elongated slit 155 and the central longitudinal axis 136 of the inner tube (not shown) is in the range of from 3° to 60°. Where the nozzle assembly is a side entry into the reactor this angle will be from about 0°, or about 3° to about 45°. Where the feed nozzle assembly is a bottom entry, the angle will be greater, for example, from about 0° to about 60°, or preferably from about 15° to about 45°, or from about 20° to about 40°, or from about 25° to about 35°. For bottom entry configurations, the angle is typically toward the centre of the riser reactor from the longitudinal axis of the steam conduit. This angle for the second nozzle tip elongated slits in the outlet end will substantially equal the angle for passageways in the outlet end of the first nozzle tip.

Typically, where the nozzle assembly is a side entry into the reactor the angle between the central longitudinal axis of the inner tube and the central longitudinal axis of the reactor will be from about 0°, or about 3° to about 45°.

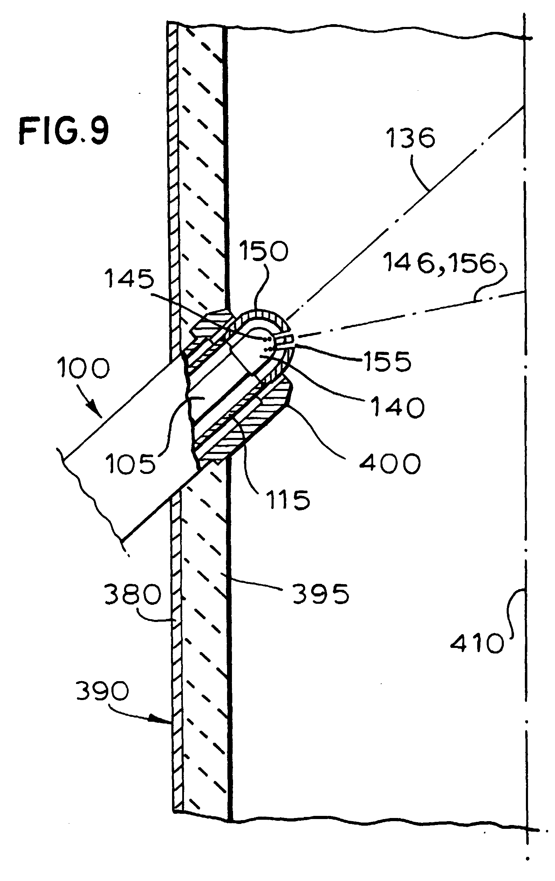

Reference is made to Figure 9 showing a longitudinal partly-sectional view of a side entry reactor configuration. The feed nozzle assembly 100 according to the present invention is arranged in the side wall 380 of a reactor 390, which side wall is internally lined with heat insulating material 395. The feed nozzle assembly 100 comprises a housing 400 in which are arranged the outer tube 115 and the inner tube 105. In the embodiment as shown, the angle between the central longitudinal axis 136 of the inner tube 105 and the central longitudinal axis 410 of the reactor 390 is 45°, and the angle between the planes 146 and 156 defined by a row of passageways 145 and defined by an elongated slit 155, respectively and the central longitudinal axis 136 of the inner tube 105 is 30°.

The angle between the plane 146 defined by a row of passageways 145 and the central longitudinal axis 136 of the inner tube 105 is substantially contiguous with the angle between the plane 156 defined by an elongated slit 155 and the central longitudinal axis 136 of the inner tube 105, so that during normal operation the direction of the fluid leaving the passageways 145 is directed towards the elongated slit(s) 155.

The feed nozzle assembly of the present invention is suitable for both bottom entry and side entry feed configuration riser reactors. In the process of renovating a side entry configuration riser reactor, optionally, only the nozzle and associated steam and feed conduits are replaced. In bottom entry configurations, the nozzle of the invention is particularly beneficial in economic savings. There is a very high cost associated with renovating a bottom entry riser reactor into a side entry riser reactor. The renovation may be uneconomical if the improved performance of a side entry reactor is offset too much by the high renovation costs. Using the nozzle of the invention this economic problem is overcome. A bottom entry riser reactor can remain so and still have the benefits of a side entry riser reactor. In this embodiment of the invention the feed and steam conduits will rise, optionally, parallel to the wall and along the outer circumference of the inside of the riser reactor. The nozzle with angled outlets are then attached to the respective steam and feed conduits. This, in effect, simulates a side entry riser reactor without the high cost of actually having side entry.

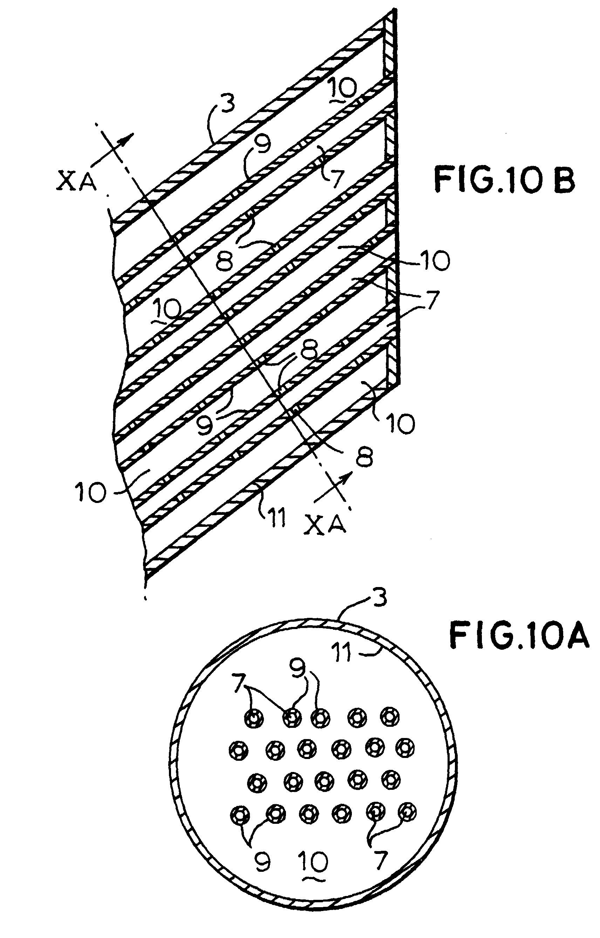

Reference is now made to Figures 10A and 10B which depict a known nozzle 3 from European patent application publication No. 423 876. This nozzle 3 is used in the Experiment discussed in the illustrated embodiment section below in comparing performance of it against an embodiment of the feed nozzle assembly of the invention. As shown in Figures 10A and 10B, the known nozzle 3 has open-ended conduits 7 for hydrocarbon feed and an outer space 10 for steam which surrounds the conduits 7 and which is closed at its downstream end. The outer conduits 7 have multiple side inlets 8 for the passage of steam from the outer space 10.

The invention is further described in the following illustrative embodiments. The illustrative embodiment are for illustrative purposes only and are not intended to limit the scope of the invention in any way.

In the following illustrative embodiment an experiment was run to compare the numerous performance factors which resulted from operation of one embodiment of the feed nozzle assembly of the invention as shown in Figures 1-5 with that of known nozzle as depicted in European patent application publication No. 423 876, as depicted in Figures 10A and 10B.

For simplification of the experiment air and water was used rather than steam and a heavy petroleum hydrocarbon. Air was fed into the steam conduit and water was fed into the heavy hydrocarbon petroleum annular conduit. Feed rates, feed pressures, and temperatures were substantially the same for each nozzle.

Table 1 gives the results of the experiment.

**Table 1.**

| Results of a comparison between the known feed nozzle assembly and the feed nozzle assembly as described with reference to Figures 1-5. | | |
|---|---|---|
| | Known Nozzle: European patent application publication No. 423 876 | Feed nozzle assembly of the invention |
| | | |
| Droplet Size | Excellent | Excellent |
| Spray Uniformity | Poor - High spray density in multiple discrete jets, low spray density between jets | Excellent-Uniform spray density |
| Riser Reactor Coverage | Fair | Excellent - 50% greater than known nozzle |
| Expansion of Spray | Poor | Excellent-Fast expansion of fan spray |
| Contact Zone | Poor - Multiple layer contacting | Excellent-Single layer contacting |
| Operation Window | Fair - Limited turndown | Excellent-Unlimited turndown |
| Compactness | Fair | Excellent - 30% reduction over known nozzle |
| | | |
| Operation Without Steam | Poor - No atomization | Good - Can function as a single phase atomizer |
| Maintenance | Poor - No access to steam orifices | Excellent-Direct access to steam orifices |

As shown in the results above, the feed nozzle assembly of the invention had a superior performance in 8 of the 9 categories.

The same experiment was done with the feed nozzle as described with reference to Figures 7 and 8. Table 2 gives the results.

**Table 2.**

| Results of a comparison between the known feed nozzle assembly and the feed nozzle assembly as described with reference to Figures 7 and 8. | | |
|---|---|---|
| | Known Nozzle: European patent application publication No. 423 876 | Feed nozzle assembly of the invention |
| | | |
| Droplet Size | Excellent | Excellent |
| Spray Uniformity | Poor - High spray density in multiple discrete jets, low spray density between jets | Excellent-Uniform spray density |
| Riser Reactor Coverage | Fair | Excellent - 50% greater than known nozzle |
| Mixing with catalyst | Poor mixing | Excellent-Fast mixing |
| Contact Zone | Poor - Multiple layer contacting | Excellent-Single layer contacting |
| Operation Window | Fair - Limited turndown | Excellent-Unlimited turndown |
| Compactness | Fair | Excellent - 30% reduction over known nozzle |
| Operation Without Steam | Poor - No atomization | Good - Can function as a single phase atomizer |
| | | |
| Maintenance | Poor - No access to steam orifices | Excellent-Direct access to steam orifices |
| Off axis injection | Not possible | Possible |

As shown in the results above, the feed nozzle assembly of the invention had a superior performance in 8 of the 9 categories, moreover with the feed nozzle assembly of the invention off axis injection is possible.

Small droplet size is important since surface is increased. A uniform spray is desirable since this results in uniform utilization of catalyst. The coverage of the spray in the reactor is significant since the greater the coverage the greater the contacting with the catalyst. A quick expansion of the spray is required to obtain contacting with more catalyst. A single contact zone of the spray with the catalyst is important in order to control the contact time of the catalyst with the feed. The "operation window" refers to the range of the ratio of steam to hydrocarbon feed over which the nozzle can effectively operate. A large range is desirable since fluctuations routinely occur in steam availability during normal refinery operations. Operation without any steam flow is useful in the case of a total steam outage. It is very useful in reducing turnaround and down time to be able to have quick access to the steam orifices since they may sometimes become obstructed. Moreover a fast mixing of the feed and catalysts is desirable to vaporize the feed.

The fine two-phase mixture passes through the feed nozzle outlet into the catalytic cracking reactor. One benefit of the nozzle assembly of this invention is that, for example, where two outlet elongated slits are used, two sheet-like fans of spray are produced which, possibly due to a vacuum effect between them, converge into one sheet while still in close proximity to the tip or outlet. Thus, fine atomization is obtained while also achieving a desirable uniform spray pattern, i.e., a flat sheet when the nozzle outlets are straight lines. It is noted that theorization as the scientific principle which produces the single sheet of spray is not meant to limit the invention as other explanations may be applicable.

## Claims

1. A feed nozzle assembly (100) for introducing gas, for example steam, and liquid, for example a heavy petroleum hydrocarbon, into a vessel, for example a catalytic cracking reactor, which feed nozzle assembly (100) comprises:
(a) a nozzle body (101) having a substantially cylindrical inner tube (105) defining a gas conduit (106) and an outer tube (115) arranged around the inner tube (105), wherein the outer surface of the inner tube and the inner surface of the outer tube define an annular liquid conduit (116), and wherein each of the tubes (105, 115) have an inlet end (120, 125) and an opposite outlet end (130, 135);
(b) a first nozzle tip (140) fixedly attached to the outlet end (130) of the inner tube (105) having a substantially cylindrical inlet end (141) attached to the outlet end (130) of the inner tube (105) and an opposite dome-shaped outlet end (142), which dome-shaped outlet end (142) is provided with at least one passageway (145);
(c) a second nozzle tip (150) fixedly attached to the outlet end (135) of the outer tube (115) and arranged around the first nozzle tip (140), which second nozzle tip (150) has a substantially cylindrical inlet end (151) attached to the outlet end (135) of the outer tube (115) and an opposite dome-shaped outlet end (152) provided with at least one elongated slit (155) having substantially parallel walls (156), which the dome-shaped outlet end (152) of the second nozzle tip (150) extends beyond the dome-shaped outlet end (142) of the first nozzle tip (140).

2. Feed nozzle as claimed in claim 1, wherein the first nozzle tip (140) is provided with a plurality of passageways (145) arranged in at least one row, wherein the angle formed from substantially the centre of the dome-shaped outlet end through the length a row is from 45° to 120°, and wherein the angle formed from substantially the centre of the dome-shaped outlet end (152) of the second nozzle tip (150) through the length of the elongated slit(s) (155) is substantially contiguous with the angle formed from the centre of the dome-shaped outlet end (142) of the first nozzle tip (140) through the length of the row(s) (145).

3. Feed nozzle as claimed in claim 2, wherein the angle formed from the centre of the dome-shaped outlet end (142) through the length of the row(s) (145) is from 75° to 105°.

4. Feed nozzle as claimed in claim 2 or 3, wherein the passageways (145) in the first nozzle tip (140) are arranged in two or more rows (145), and wherein the outlet end of the second nozzle tip (150) is provided with two or more slits (155).

5. Feed nozzle as claimed in any one of the claims 2-4, wherein the plane (146) defined by a row of passageways (145) is substantially parallel to the central longitudinal axis (136) of the inner tube (105).

6. Feed nozzle as claimed in any one of the claims 2-4, wherein the plane (156) defined by an elongated slit (155) is substantially parallel to the central longitudinal axis (136) of the inner tube (105).

7. Feed nozzle as claimed in any one of the claims 2-4, wherein the angle between the plane (146) defined by a row of passageways (145) and the central longitudinal axis (136) of the inner tube (105) is in the range of from 3° to 60° and suitably in the range of from 15° to 45°, and wherein the angle between the plane (156) defined by an elongated slit (155) and the central longitudinal axis (136) of the inner tube (105) is in the range of from 3° to 60° and suitably in the range of from 15° to 45°.

8. Feed nozzle as claimed in claim 7, wherein the angle between the plane (146) defined by a row of passageways (145) and the central longitudinal axis (136) of the inner tube (105) is substantially contiguous with the angle between the plane (156) defined by an elongated slit (155) and the central longitudinal axis (136) of the inner tube.

9. Feed nozzle assembly as claimed in any one of the claims 1-8, wherein the passageways (145) in the first nozzle tip (140) consist essentially of holes.

10. Feed nozzle assembly as claimed in any one of the claims 2-9, wherein each row comprises a plurality of passageways, the number of passageways being suitably in the range from 7 to 15.

11. Feed nozzle assembly as claimed in any one of the claims 1-10, wherein the second nozzle tip is provided with an overlay consisting of an erosion-resistant material at erosion sensitive areas of the elongated slit(s) and the outlet end of the second nozzle tip.

12. Use of a feed nozzle assembly (100) according to any one of claims 1-11 in a process for catalytically cracking a heavy petroleum hydrocarbon, wherein the heavy petroleum hydrocarbon is supplied to the inlet end (125) of the outer tube (115) and passes through the annular liquid conduit (116) and steam is passed through the substantially cylindrical inner tube (105) and exiting the passageways (145) into the heavy petroleum hydrocarbon, wherein the resulting mixture of steam and heavy petroleum hydrocarbon is passed into the catalytic cracking reactor via the second nozzle tip (150) out of the feed nozzle assembly (100).

## Patentansprüche

1. Zufuhrdüsenanordnung (100) zum Einbringen von Gas, beispielsweise Dampf, und einer Flüssigkeit, beispielsweise eines schweren Erdölkohlenwasserstoffes, in ein Gefäß, beispielsweise einen katalytischen Crackreaktor, welche Zufuhrdüsenanordnung (100) aufweist:
(a) einen Düsenkörper (101) mit einem im wesentlichen zylindrischen Innenrohr (105), das eine Gasleitung (106) definiert, und einem Außenrohr (115), das um das Innenrohr (105) angeordnet ist, wobei die Außenseite des Innenrohres und die Innenseite des Außenrohres eine ringförmige Flüssigkeitsleitung (116) definieren, und wobei jedes der Rohre (105, 115) ein Einlaßende (120, 125) und ein gegenüberliegendes Auslaßende (130, 135) hat;
(b) eine erste Düsenspitze (140), die fest am Auslaßende (130) des Innenrohres (105) befestigt ist und ein im wesentlichen zylindrisches Einlaßende (141), das am Auslaßende (130) des Innenrohres (105) befestigt ist, und ein gegenüberliegendes kuppelförmiges Auslaßende (142) aufweist, welches kuppelförmige Auslaßende (142) mit zumindest einem Durchlaß (145) ausgestattet ist;
(c) eine zweite Düsenspitze (150), die fest am Auslaßende (135) des Außenrohres (115) befestigt ist und rund um die erste Düsenspitze (140) angeordnet ist, welche zweite Düsenspitze (150) ein im wesentlichen zylindrisches Einlaßende (151), das am Auslaßende (135) des Außenrohres (115) befestigt ist, und ein gegenüberliegendes kuppelförmiges Auslaßende (152) aufweist, das mit zumindest einem langgestreckten Schlitz (155) mit im wesentlichen parallelen Wänden (156) versehen ist, welches kuppelförmige Auslaßende (152) der zweiten Düsenspitze (150) sich über das kuppelförmige Auslaßende (142) der ersten Düsenspitze (140) hinauserstreckt.

2. Zufuhrdüse nach Anspruch 1, bei welcher die erste Düsenspitze (140) mit einer Mehrzahl von Durchlässen (145) versehen ist, die in zumindest einer Reihe angeordnet sind, wobei der Winkel, der ausgehend von im wesentlichen dem Mittelpunkt des kuppelförmigen Auslaßendes durch die Länge einer Reihe hindurch gebildet ist, zwischen 45° und 120° liegt, und wobei der Winkel, der im wesentlichen ausgehend vom Mittelpunkt des kuppelförmigen Auslaßendes (152) der zweiten Düsenspitze (150) durch die Länge des/der langgestreckten Schlitze(s) (155) hindurch gebildet ist, im wesentlichen fortlaufend mit dem vom Mittelpunkt des kuppelförmigen Auslaßendes (142) der ersten Düsenspitze (140) durch die Länge der Reihe(n) (145) hindurch gebildeten Winkel ist.

3. Zufuhrdüse nach Anspruch 2, bei welcher der vom Mittelpunkt des kuppelförmigen Auslaßendes (142) durch die Länge der Reihe(n) (145) hindurch gebildete Winkel zwischen 75° und 105° liegt.

4. Zufuhrdüse nach Anspruch 2 oder 3, bei welcher die Durchlässe (145) in der ersten Düsenspitze (140) in zwei oder mehr Reihen (145) angeordnet sind, und wobei das Auslaßende der zweiten Düsenspitze (150) mit zwei oder mehr Schlitzen (155) versehen ist.

5. Zufuhrdüse nach einem der Ansprüche 2-4, bei welcher die durch eine Reihe von Durchlässen (145) definierte Ebene (146) im wesentlichen parallel zur zentralen Längsachse (136) des Innenrohres (105) ist.

6. Zufuhrdüse nach einem der Ansprüche 2-4, bei welcher die durch einen langgestreckten Schlitz (155) definierte Ebene (156) im wesentlichen parallel zur zentralen Längsachse (136) des Innenrohres (105) ist.

7. Zufuhrdüse nach einem der Ansprüche 2-4, bei welcher der Winkel zwischen der Ebene (146), der durch eine Reihe von Durchlässen (145) definiert wird, und der zentralen Längsachse (136) des Innenrohres (105) im Bereich von 3° bis 60° und geeigneterweise im Bereich von 15° bis 45° liegt, und wobei der Winkel zwischen der durch einen langgestreckten Schlitz (155) gebildeten Ebene (156) und der zentralen Längsachse (136) des Innenrohres (105) im Bereich von 3° bis 60° und geeigneterweise im Bereich von 15° bis 45° liegt.

8. Zufuhrdüse nach Anspruch 7, bei welcher der Winkel zwischen der Ebene (146), die durch eine Reihe von Durchlässen (145) gebildet wird, und der zentralen Längsachse (136) des Innenrohres (105) im wesentlichen fortlaufend mit dem Winkel zwischen der Ebene (156), die durch einen langgestreckten Schlitz (155) gebildet wird, und der zentralen Längsachse (136) des Innenrohres ist.

9. Zufuhrdüsenanordnung nach einem der Ansprüche 1-8, bei welcher die Durchlässe (145) in der ersten Düsenspitze (140) im wesentlichen aus Löchern bestehen.

10. Zufuhrdüsenanordnung nach einem der Ansprüche 2-9, bei welcher jede Reihe eine Mehrzahl von Durchlässen aufweist, wobei die Anzahl von Durchlässen geeigneterweise im Bereich von 7 bis 15 liegt.

11. Zufuhrdüsenanordnung nach einem der Ansprüche 1-10, bei welcher die zweite Düsenspitze mit einem Überzug aus erosionsbeständigem Material an erosionsempfindlichen Bereichen des/der langgestreckten Schlitze(s) und dem Auslaßende der zweiten Düsenspitze versehen ist.

12. Verwendung einer Zufuhrdüsenanordnung (100) nach einem der Ansprüche 1-11 in einem Verfahren zum katalytischen Cracken eines schweren Erdölkohlenwasserstoffes, wobei der schwere Erdölkohlenwasserstoff dem Einlaßende (125) des Außenrohres (115) zugeführt und durch die ringförmige Flüssigkeitsleitung (116) hindurchtritt, und Dampf durch das im wesentlichen zylindrische Innenrohr (105) geleitet wird und aus den Durchlässen (145) heraus in den schweren Erdölkohlenwasserstoff eintritt, wobei die sich ergebende Mischung aus Dampf und schwerem Erdölkohlenwasserstoff in den katalytischen Crackreaktor über die zweite Düsenspitze (150) aus der Zufuhrdüsenanordnung (100) heraus geleitet wird.

## Revendications

1. Assemblage d'ajutage d'alimentation (100) pour introduire un gaz, par exemple de la vapeur, et un liquide, par exemple un hydrocarbure de pétrole lourd, dans un récipient, par exemple un réacteur de craquage catalytique, lequel assemblage d'ajutage d'alimentation (100) comprend :
(a) un corps d'ajutage (101) comportant un tube intérieur (105) sensiblement cylindrique définissant un conduit de gaz (106) et un tube extérieur (115) agencé autour du tube intérieur (105), dans lequel la surface extérieure du tube intérieur et la surface intérieure du tube extérieure définissent un conduit de liquide annulaire (116), et dans lequel chacun des tubes (105, 115) comporte une extrémité d'entrée (120, 125) et une extrémité de sortie opposée (130, 135);
(b) une première tête d'ajutage (140) attachée de façon fixe à l'extrémité de sortie (130) du tube intérieur (105) comportant une extrémité d'entrée sensiblement cylindrique (141) attachée à l'extrémité de sortie (130) du tube intérieur (105) et une extrémité de sortie bombée opposée (142), laquelle extrémité de sortie bombée (142) est pourvue d'au moins un passage (145);
(c) une seconde tête d'ajutage (150) attachée de façon fixe à l'extrémité de sortie (135) du tube extérieur (115) et agencée autour de la première tête d'ajutage (140), laquelle seconde tête d'ajutage (150) comporte une extrémité d'entrée sensiblement cylindrique (151) attachée à l'extrémité de sortie (135) du tube extérieur (115) et une extrémité de sortie bombée opposée (152) pourvue d'au moins une fente allongée (155) comportant des parois sensiblement parallèles (156), laquelle extrémité de sortie bombée (152) de la seconde tête d'ajutage (150) s'étend au-delà de l'extrémité de sortie bombée (142) de la première tête d'ajutage (140).

2. Ajutage d'alimentation suivant la revendication 1, dans lequel la première tête d'ajutage (140) est pourvue d'une série de passages (145) agencés en au moins une rangée, dans lequel l'angle formé pratiquement à partir du centre de l'extrémité de sortie bombée sur toute la longueur d'une rangée est de 45° à 120°, et dans lequel l'angle formé pratiquement à partir du centre de l'extrémité de sortie bombée (152) de la seconde tête d'ajutage (150) sur toute la longueur de la ou des fentes allongées (155) est sensiblement contigu à l'angle formé à partir du centre de l'extrémité de sortie bombée (142) de la première tête d'ajutage (140) sur toute la longueur de la ou des rangées (145).

3. Ajutage d'alimentation suivant la revendication 2, dans lequel l'angle formé à partir du centre de l'extrémité de sortie bombée (142) sur toute la longueur de la ou des rangées (145) est de 75° à 105°.

4. Ajutage d'alimentation suivant l'une ou l'autres des revendications 2 et 3, dans lequel les passages (145) dans la première tête d'ajutage (140) sont agencés en deux ou plusieurs rangées (145), et dans lequel l'extrémité de sortie de la seconde tête d'ajutage (150) est pourvue de deux ou plusieurs fentes (155).

5. Ajutage d'alimentation suivant l'une quelconque des revendications 2 à 4, dans lequel le plan (146) défini par une rangée de passages (145) est sensiblement parallèle à l'axe longitudinal central (136) du tube intérieur (105).

6. Ajutage d'alimentation suivant l'une quelconque des revendications 2 à 4, dans lequel le plan (156) défini par une fente allongée (155) est sensiblement parallèle à l'axe longitudinal central (136) du tube intérieur (105).

7. Ajutage d'alimentation suivant l'une quelconque des revendications 2 à 4, dans lequel l'angle entre le plan (146) défini par une rangée de passages (145) et l'axe longitudinal central (136) du tube intérieur (105) se situe dans la gamme de 3° à 60° et d'une façon appropriée dans la gamme de 15° à 45°, et dans lequel l'angle entre le plan (156) défini par une fente allongée (155) et l'axe longitudinal central (136) du tube intérieur (105) se situe dans la gamme de 3° à 60° et d'une façon appropriée dans la gamme de 15° à 45°.

8. Ajutage d'alimentation suivant la revendication 7, dans lequel l'angle entre le plan (146) défini par une rangée de passages (145) et l'axe longitudinal central (136) du tube intérieur (105) est sensiblement contigu à l'angle entre le plan (156) défini par une fente allongée (155) et l'axe longitudinal central (136) du tube intérieur.

9. Assemblage d'ajutage d'alimentation suivant l'une quelconque des revendications 1 à 8, dans lequel les passages (145) dans la première tête d'ajutage (140) se composent essentiellement de trous.

10. Assemblage d'ajutage d'alimentation suivant l'une quelconque des revendications 2 à 9, dans lequel chaque rangée comprend une série de passages, le nombre de passages se situant d'une façon appropriée dans la gamme de 7 à 15.

11. Assemblage d'ajutage d'alimentation suivant l'une quelconque des revendications 1 à 10, dans lequel la seconde tête d'ajutage est pourvue d'un recouvrement formé d'une matière résistante à l'érosion à l'endroit de zones sensibles à l'érosion de la ou des fentes allongées et de l'extrémité de sortie de la seconde tête d'ajutage.

12. Utilisation d'un assemblage d'ajutage d'alimentation (100) suivant l'une quelconque des revendications 1 à 11, dans un procédé pour le craquage catalytique d'un hydrocarbure de pétrole lourd, dans lequel l'hydrocarbure de pétrole lourd est amené à l'extrémité d'entrée (125) du tube extérieur (115) et passe par le conduit de liquide annulaire (116) et de la vapeur est amenée par le tube intérieur sensiblement cylindrique (105) et sort par les passages (145) dans l'hydrocarbure de pétrole lourd, dans lequel le mélange résultant de vapeur et d'hydrocarbure de pétrole lourd est amené dans le réacteur de craquage catalytique via la seconde tête d'ajutage (150) hors de l'assemblage d'ajutage d'alimentation (100).
